(19) Europäisches Patentamt
European Patent Office
Office européen des brevets

(11) EP 4 564 728 A1

(12) EUROPEAN PATENT APPLICATION

(43) Date of publication:
04.06.2025 Bulletin 2025/23

(51) International Patent Classification (IPC):
H04L 5/00 (2006.01)    H04B 7/06 (2006.01)

(21) Application number: 24214712.2

(52) Cooperative Patent Classification (CPC):
H04L 5/0023; H04B 7/06; H04L 5/0094;
H04L 5/0053

(22) Date of filing: 22.11.2024

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.11.2023  FI 20236296

(71) Applicant: Nokia Solutions and Networks Oy
02610 Espoo (FI)

(72) Inventors:
• CHEN, Yejian
  70437 Stuttgart (DE)
• WU, Meng
  89077 Ulm (DE)

(74) Representative: Nokia EPO representatives
Nokia Technologies Oy
Karakaari 7
02610 Espoo (FI)

(54) ADAPTIVE BEAMFORMING FOR WIRELESS COMMUNICATION

(57) The present subject matter relates to a sender apparatus, for a wireless communication system, the sender apparatus comprising means, the means being configured for: determining a first beamforming configuration for a specific time period in accordance with a state of a channel between the sender apparatus and a receiver apparatus for transmission of data to the receiver apparatus; during the specific time period: transmitting data to the receiver apparatus using the first beamforming configuration or using a second beamforming configuration in case of a time variation of the channel

Fig. 9

**Description**

Technical Field

Various example embodiments relate to telecommunication systems, and more particularly to beamforming for wireless communication.

Background

The recent development at receiver with artificial intelligence (AI)-based technique makes the gNodeB (gNB) become more and more powerful, in terms of Uplink (UL) channel estimation and data detection. Nevertheless, the channel aging effect may be the dominant bottleneck in Downlink (DL), even if the SRS-based channel estimation was successfully done.

Summary

Example embodiments provide a sender apparatus, for a wireless communication system, the sender apparatus comprising means, the means being configured for: determining a first beamforming configuration for a specific time period in accordance with a state of a channel between the sender apparatus and a receiver apparatus for transmission of data to the receiver apparatus; during the specific time period: transmitting data to the receiver apparatus using the first beamforming configuration or using a second beamforming configuration in case of a time variation of the channel.

Example embodiments provide a method comprising: determining a first beamforming configuration for a specific time period in accordance with a state of a channel between a sender apparatus and a receiver apparatus for transmission of data to the receiver apparatus; during the specific time period: transmitting data to the receiver apparatus using the first beamforming configuration or using a second beamforming configuration in case of a time variation of the channel.

Example embodiments provide a computer program comprising instructions for causing a sender apparatus for performing at least the following: determining a first beamforming configuration for a specific time period in accordance with a state of a channel between the sender apparatus and a receiver apparatus for transmission of data to the receiver apparatus; during the specific time period: transmitting data to the receiver apparatus using the first beamforming configuration or using a second beamforming configuration in case of a time variation of the channel.

The means of the sender apparatus comprises at least one processor; and at least one memory including computer program code, the at least one memory and computer program code configured to, with the at least one processor, perform the method.

Brief Description of the Drawings

The accompanying figures are included to provide a further understanding of examples, and are incorporated in and constitute part of this specification. In the figures:

FIG.1 illustrates a part of an exemplifying radio access network;

FIG. 2 is a schematic illustration of a wireless communication system;

FIG. 3A is a flowchart of a method according to an example of the present subject matter;

FIG. 3B is a flowchart of a method according to an example of the present subject matter;

FIG. 4 is a flowchart of a method of transmitting data according to an example of the present subject matter;

FIG. 5 is a flowchart of a method of transmitting data according to an example of the present subject matter;

FIGs. 6A and 6B is a flowchart and diagram for a method of transmitting data according to an example of the present subject matter;

FIG. 7A is a diagram illustrating a method for determining the beamforming configurations for the first beamforming time segment and second beamforming time segment in accordance with an example of the present subject matter;

FIG. 7B is a diagram illustrating a method for determining the beamforming configurations for the first beamforming time segment and second beamforming time segment in accordance with an example of the present subject matter;

FIG. 8 is a flowchart of a method of transmitting data according to an example of the present subject matter;

FIG. 9 is a block diagram showing an example of an apparatus according to an example of the present subject matter.

Detailed Description

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

A wireless communication system may be provided. The wireless communication system comprises nodes such as base stations, wherein each node may serve user equipments (UEs) located within the node's geographical area of service or a cell. The wireless communication system may support one or more radio access technologies (RATs). A radio access technology of the radio access technologies may, for example, be evolved universal terrestrial radio access (E-UTRA) or 5G new radio (NR), or a future 6G based system, but it is not limited to those, as a person skilled in the art may apply the present subject matter to other communication systems provided with necessary properties.

The communication between a transmitter and a receiver in the wireless communication system may be performed in form of signals which traverse a wireless medium. The medium may be referred to as channel. The transmitted signal may be distorted from the noise or from other signals traversing the same medium. This may introduce errors in signals at the receiver. In order to correct this, the characteristics of the channel may be determined. The process of determining the characteristics of the channel may be referred to as channel estimation. However, the channel estimation may not be enough to cope with this problem. For example, the wireless communication system may experience time variations of wireless channels due to the Doppler effect. Different sources may cause the time variations of the wireless channel due to the Doppler effect. For example, the mobility of a transmitter or a receiver at both ends of the wireless channel may cause time variations of the wireless channel. This may cause, for example, channel aging. The channel aging may refer to the temporal variations introduced in the wireless channel due to the relative motion of the users with respect to the base station. The channel aging may cause a mismatch between the true state of the communication channel and the available channel state information. In another example, even if the transmitter and receiver are static, the movement of scatterers such as objects that reflect, scatter, or diffract the propagating waves, may cause time variations of the wireless channel. The state of the channel may, for example, include a path loss and/or channel gain of the channel.

The present subject matter may adapt the data transmission settings based on the presence of time variations in the wireless channel. This may prevent loss of downlink (DL) throughput or uplink (UL) throughput. For that, a sender apparatus may be provided.

The sender apparatus comprises means which are configured for performing the present subject matter. The means may comprise, for example, at least one processor, and at least one memory including computer program code. The at least one memory and computer program code are configured to, with the at least one processor, perform the present method.

The sender apparatus may be configured to transmit data to the receiver apparatus using beamforming. The beamforming may be a technique used to improve the signal-to-noise ratio of received signals, eliminate undesirable interference sources, and focus transmitted signals to specific locations. For example, the sender apparatus may comprise a multi-antenna system. The multi-antenna system may comprise one or more arrays of antenna elements. The array may be a collection of multiple antenna elements arranged in a matrix of rows and columns or some other pattern. The multi-antenna system may be used to perform the beamforming. The beamforming may, for example, be a signal processing technique that may be used at the sender apparatus to add together radiation patterns of each of the antenna elements in an array in such a way that they concentrate the energy into a narrow beam or lobe. Beamforming may be achieved by combining the signals communicated via antenna elements of the antenna array. The combination may, for example, be performed such that some of the signals experience constructive interference while others experience destructive interference. The means of the sender apparatus may be configured to control the multi-antenna system to perform the beamforming using beamforming configuration or settings. The beamforming configuration may indicate at least one of: the antenna elements of the array to be used for beamforming or weights to be used for weighting signals through the antenna elements. The weights may, for example, comprise the phases and/or amplitudes to be applied to the antenna elements. The weights may allow electronic variation of the phase and the amplitude of the signal to be transmitted or the signal received. The beamforming may be a single-stream beamforming meaning that the same signal is emitted from each of the transmit antennas with appropriate weighting (phase and gain) such that the signal power is maximized at the receiver output. Alternatively, the beamforming may be a multi-stream beamforming. This may be advantageous in case the receiver apparatus has multiple antennas. This may enable to implement precoding.

The sender apparatus may use the state of the wireless channel between the sender apparatus and the receiver apparatus in order to determine the beamforming configuration to be used for transmission of data to the receiver apparatus. The determined beamforming configuration may be referred to as first beamforming configuration. The state of the channel may be assumed to be descriptive of the channel for a specific time period ($T_s$). It may thus be assumed that the first beamforming configuration is valid for the specific time period. However, the state of the channel may change (significantly) during the specific time period. For that, the sender apparatus may be configured during the specific time period to transmit data to the receiver apparatus using the first beamforming configuration or using a second beamforming configuration in case of a time variation of the channel. For example, in response to detecting or predicting by the sender apparatus that a time variation of the channel may occur such that the state of the channel in a first subperiod of the specific time period may be different from the state of the channel in a second subperiod of the specific time period, the sender apparatus may transmit the data to the receiver apparatus using the first beamforming configuration during the first subperiod and using the second beamforming configuration during the second subperiod.

According to one example, the first beamforming configuration is determined by the sender apparatus for a specific mobility of the receiver apparatus, wherein predicting the time variation of the channel is performed by predicting a change of the specific mobility during a time segment of the specific time period, wherein the second beamforming configuration is used during the time segment. For example, the specific time period may be the time range $[T_0, T_0+ T_s]$ which may comprise two intervals $[T_0, T_c]$ and $]T_c, T_0+ T_s]$, wherein the receiver apparatus may have the specific mobility during the interval $[T_0, T_c]$ and another different mobility in the time segment $]T_c, T_0+ T_s]$. That is, the specific mobility of the receiver apparatus changes (to the other mobility) during the time segment $]T_c, T_0+ T_s]$. The mobility of the receiver apparatus may be a speed and/or a direction of the receiver apparatus. A specific mobility may be a specific value of the speed and/or a specific direction.

According to one example, the second beamforming configuration may be a predefined configuration e.g., the first and second beamforming configurations may be predefined before the start of the specific time period. Alternatively, the second beamforming configuration may be dynamically determined e.g., the first beamforming configuration may be predefined before the start of the specific time period and the second beamforming configuration may be determined during the specific time period. In one example, the second beamforming configuration may be determined in response to detecting the time variation of the channel between the sender apparatus and the receiver apparatus. The second beamforming configuration is different from the first beamforming configuration.

According to one example, the time variation of the channel is predicted by the sender apparatus before using the first beamforming configuration. The specific time period is split into a first time segment and a second time segment. In addition, the first beamforming configuration and the second beamforming configuration are predefined for the first time segment and second time segment respectively. The first beamforming configuration is used during the first time segment for transmission of data to the receiver apparatus. The second beamforming configuration is used during the second time segment for transmission of data to the receiver apparatus.

According to one example, the data may be transmitted by the sender apparatus in subframes. It may be determined whether a current subframe of the data belongs to the second time segment. In case the current subframe of the data does not belong to the second time segment, the transmission of the subframe is performed using the first beamforming configuration. In case the current subframe of the data belongs to the second time segment the transmission of the subframe is performed using the second beamforming configuration.

According to one example, the first beamforming configuration is determined by the sender apparatus so that it maximizes the Signal-to-Interference-and-Noise-Ratio (SINR) of the receiver apparatus and one or more further receiver apparatuses. The second beamforming configuration is determined so that it maximizes the sum power of the receiver apparatus and further receiver apparatuses.

According to one example, the data is transmitted by the sender apparatus using the first beamforming configuration in accordance with a first modulation and coding scheme, and using the second beamforming configuration in accordance with a second modulation and coding scheme. For example, the first modulation and coding scheme may be a high order modulation scheme such as 16QAM or 64QAM. This may further improve the DL sum rate. The second modulation and coding scheme may be a low order modulation scheme such as QPSK. This may decrease the SINR threshold for successful detection and decoding.

According to one example, the time variation of the channel is detected by the sender apparatus during the specific time period. This detection may, for example, comprise using channel estimates, based on the received signal in the buffer, to recognize the trend of channel variation. Alternatively, or additionally, the detection may be performed using a location-based service that may provide the mobility and the change of mobility of receiver apparatuses such as a UE. Alternatively, or additionally, the detection may be performed using a data bank, based on the location-based service for specific geographical areas, which may help to quantify channel aging, to establish the one-to-one correspondence between the time period and first or second beamforming options.

According to one example, each configuration of the first and second beamforming configurations comprises weights for weighting signals to be transmitted by the sender apparatus in order to form beams toward the receiver apparatus.

According to one example, the receiver apparatus is configured to send to the sender apparatus repeatedly a reference signal. The receiver apparatus may send the reference signal periodically or aperiodically. The sender apparatus may use the reference signal to estimate the state of the channel. The estimated state may be valid until the next reference signal is received. The specific time period $T_s$ may be a periodicity of the reception of the reference signal. The reference signal may be a Sounding Reference Signal (SRS), a DeModulation Reference Signal (DMRS) or a reference signal that can be used for estimating the state of the channel.

According to one example, each beamforming configuration of the first beamforming configuration and the second beamforming configuration is an analog and/or digital beamforming configuration.

Beamforming for downlink transmissions

In one example, the receiver apparatus may be a user equipment. The sender apparatus may, for example, be or comprised in a base station such as a Node B, enhanced or evolved NodeB (eNB), a home eNode B (HeNB), a gNB, an access point (AP), a femto node, a femto base station, a transmit receive point (TRP), a base transceiver station (BTS), or any other equipment belonging to the communication system and implementing a radio communication interface. Providing different types of nodes may enable a flexible implementation of the present subject matter. The sender apparatus may, for example, be a Distributed Unit (DU) of the base station. The sender apparatus may be static or may have a mobility. The sender apparatus may, for example, be a moving apparatus such as a moving BTS. The sender apparatus may, for example, be part of a moving vehicle or an Unmanned Aerial Vehicle (UAV). The sender apparatus may be configured to serve user equipments in the wireless communication system. This may prevent loss of DL throughput.

The sender apparatus may be configured to serve a user equipment (named as UE1). The user equipment may, for example, be a subscriber terminal, a smartphone, a mobile station, a mobile phone, a headset, a portable computer, a pad computer or another type of wireless mobile communication device operating with or without a subscriber identification module (SIM). Providing different types of user equipments may enable a flexible implementation of the present subject matter.

The sender apparatus may use the state of the wireless channel between the sender apparatus and the user equipment UE1 in order to determine the beamforming configuration to be used for transmission of data to the user equipment UE1. The determined beamforming configuration may be referred to as first beamforming configuration. The state of the channel may be assumed to be descriptive of the channel for a specific time period ($T_s$). It may thus be assumed that the first beamforming configuration is valid for the specific time period. However, the state of the channel may change (significantly) during the time period. For that, the sender apparatus may be configured during the time period to transmit data to the user equipment UE1 using the first beamforming configuration or using a second beamforming configuration in case of a time variation of the channel.

The second beamforming configuration may be a predefined configuration. Alternatively, the second beamforming configuration may be dynamically determined. In one example, the second beamforming configuration may be determined in response to detecting the time variation of the channel between the apparatus and the user equipment UE1.

According to one example, the first beamforming configuration is determined for a specific mobility of the user equipment UE1, wherein predicting the time variation of the channel is performed by predicting a change of the specific mobility during a time segment of the specific time period, wherein the second beamforming configuration is used during the time segment. The mobility of the user equipment UE1 may be a speed and/or a direction of the user equipment. A specific mobility may be a specific value of the speed and/or a specific direction.

The present method may, for example, be used in a scenario, in which the SRS interval cannot be adjusted in real-time, when UE starts to increase its mobility. The method may provide a conservative DL beamforming strategy to deal with such scenario. According to the physical limit for the channel prediction, the first beamformer, that performs the first beamforming configuration, may be exploited for the subframes, in which short-term channel information may still be reliable. The second beamformer, that performs the second beamforming configuration, may be exploited for the subframes, which require long-term 2nd order channel statistics as a relative robust estimation against short-term channel aging. Link adaptation may help the UE to keep the link quality for data reception, until the SRS interval is adjusted, so that the data retransmission can be effectively avoided and the overall DL throughput can be maintained well.

According to one example, the time variation of the channel may be predicted by predicting that a mobility of a group of receiver apparatuses which are being served by the sender apparatus will change and/or a mobility of the sender apparatus will change. Each receiver apparatus of the group of receiver apparatuses may be a user equipment. The group of receiver apparatuses includes the user equipment UE1. The first beamforming configuration and second beamforming configuration are determined for transmission of data to the group of receiver apparatuses. The transmission of data to the group of receiver apparatuses includes the transmission of the data to the user equipment UE1.

According to one example, the user equipment UE1 is configured to send to the sender apparatus repeatedly a reference signal. The user equipment UE1 may send the reference signal periodically or aperiodically. The sender apparatus may use the reference signal for estimating the state of the channel using the reference signal. The estimated state may be valid until the next reference signal is received. The specific time period $T_s$ may be a periodicity of the reception of the reference signal.

According to one example, the reference signal is a Sounding Reference Signal (SRS), a DeModulation Reference Signal (DMRS) or a reference signal that can be used for estimating the state of the channel.

According to one example, the first beamforming configuration is determined so that it maximizes the Signal-to-Interference-and-Noise-Ratio (SINR) of the user equipment UE1 and one or more further user equipments. The second beamforming configuration is determined so that it maximizes the sum power of the user equipment UE1 and further user equipments.

According to one example, the data may be transmitted to the user equipment UE1 using the first beamforming configuration in accordance with a first modulation and coding scheme, and/or the second beamforming configuration in accordance with a second modulation and coding scheme. For example, the first modulation and coding scheme may be a high order modulation scheme such as 16QAM or 64QAM. This may further improve the DL sum rate. The second modulation and coding scheme may be a low order modulation scheme such as QPSK. This may decrease the SINR threshold for successful detection and decoding.

According to one example, each configuration of the first and second beamforming configurations comprises weights for weighting signals to be transmitted by the sender apparatus in order to form beams toward the user equipment UE1.

According to one example, each beamforming configuration of the first beamforming configuration and the second beamforming configuration is an analog and/or digital beamforming configuration. The first beamforming configuration may be determined by a first beamformer of the sender apparatus and the second beamforming configuration may be determined by a second beamformer of the sender apparatus.

Beamforming for uplink transmissions

In one example, the sender apparatus may be a user equipment. The receiver apparatus may, for example, be or comprised in a base station such as a Node B, enhanced or evolved NodeB (eNB), a home eNode B (HeNB), an access point (AP), a gNB, a femto node, a femto base station, a transmit receive point (TRP), a base transceiver station (BTS), UAV or any other equipment belonging to the communication system and implementing a radio communication interface. The receiver apparatus may, for example, be a Distributed Unit (DU) of the base station. The receiver apparatus may or may not have a mobility. The receiver apparatus may, for example, be a moving apparatus such as a moving BTS. The receiver apparatus may, for example, be part of a moving vehicle or an Unmanned Aerial Vehicle (UAV). The sender apparatus may be served by the receiver apparatus in the wireless communication system. This may prevent loss of UL throughput.

According to one example, the user equipment is configured to receive from the receiver apparatus repeatedly a reference signal. According to one example, the reference signal is a Positioning Reference Signal (PRS).

The receiver apparatus may send the reference signal periodically or aperiodically. The user equipment may use the reference signal for estimating the state of the channel using the reference signal. The estimated state may be valid until the next reference signal is received. The specific time period may be a periodicity of the reception of the reference signal.

According to one example, the time variation of the channel may be predicted by the user equipment by predicting that a mobility of a group of base stations which are being associated with the user equipment will change. The group of base stations includes the base station that serves the user equipment and one or more neighbouring base stations. For example, the one or more neighbouring base stations may be the base stations that have the highest signal quality (e.g., highest reference signal received power (RSRP)) at the user equipment. The first beamforming configuration and second beamforming configuration are determined by the user equipment for transmission of data to the group of base stations. This example may be advantageous for the following example reasons. The user equipment may be able to "consider" a group of gNBs. The user equipment may recognize its own mobility to the main service gNB, and decide the time splitting for active and conservative beamforming/precoding, meanwhile trying to reduce the transmit power (as unwanted interference) to the rest of the gNBs in the group of gNBs. This may be advantageous if non-codebook based precoding is adopted. Thus, a UE can reciprocally use the same mechanism (as in the downlink case) and the main service gNB can transparently (e.g., without the knowledge of precoding/beamforming weights) receive the signal from that UE.

In the uplink case, the variation of the channel may be caused by the movement of the UE and/or receiver apparatus.

According to one example, the receiver apparatus may be a moving BTS, wherein the first beamforming configuration is determined for a specific mobility of the BTS, wherein predicting the time variation of the channel is performed by predicting a change of the specific mobility of the BTS during a time segment of the specific time period, wherein the second beamforming configuration is used during the time segment. The mobility of the BTS may be a speed and/or direction of the BTS. A specific mobility may be a specific value of the speed and/or specific direction.

According to one example, the receiver apparatus may be a moving BTS, wherein the first beamforming configuration is determined by the user equipment for a first specific mobility of the BTS and a second specific mobility of the user equipment, wherein predicting the time variation of the channel is performed by predicting a change of the first specific mobility and/or second specific mobility during a time segment of the specific time period, wherein the second beamforming configuration is used during the time segment.

The present subject matter may comprise the following clauses.

Clause 1: A sender apparatus for a wireless communication system, the sender apparatus comprising: at least one processor; and at least one memory storing instructions that, when executed by the at least one processor, cause the sender apparatus at least to perform: determining a first beamforming configuration for a specific time period in accordance with a state of a channel between the sender apparatus and a receiver apparatus for transmission of data to the receiver apparatus; during the specific time period: transmitting data to the receiver apparatus using the first beamforming configuration or using a second beamforming configuration in case of a time variation of the channel.

Clause 2. The apparatus of clause 1, the receiver apparatus being a user equipment that is served by the sender apparatus, the sender apparatus being a base station or being part of the base station.

Clause 3. The apparatus of clause 1, the receiver apparatus being a user equipment, wherein the instructions, when executed by the at least one processor, further cause the sender apparatus to predict the time variation of the channel by predicting that a mobility of a group of receiver apparatuses which are being served by the sender apparatus and/or a mobility of the sender apparatus will change, the group of receiver apparatuses including the receiver apparatus, wherein the first beamforming configuration and second beamforming configuration are determined for transmission of data to the group of receiver apparatuses.

Clause 4. The apparatus of clause 1, wherein the first beamforming configuration is determined for a specific mobility of the receiver apparatus, wherein the instructions, when executed by the at least one processor, further cause the sender apparatus to predict the time variation of the channel by predicting a change of the specific mobility during a second beamforming time segment of the specific time period, wherein the second beamforming configuration is used during the second beamforming time segment.

Clause 5. The apparatus of clause 1, wherein the instructions, when executed by the at least one processor, further cause the sender apparatus to: predict the time variation of the channel before using the first beamforming configuration; split the specific time period into a first beamforming time segment and a second beamforming time segment; predefine the first beamforming configuration and the second beamforming configuration such that the first beamforming configuration is used during the first beamforming time segment and the second beamforming configuration is used during the second beamforming time segment.

Clause 6. The apparatus of clause 1, wherein the instructions, when executed by the at least one processor, further cause the sender apparatus to detect the time variation of the channel during the specific time period.

Clause 7. The apparatus of clause 1, wherein the instructions, when executed by the at least one processor, further cause the sender apparatus to transmit data in subframes by at least: determining whether a current subframe of the data belongs to the second beamforming time segment; in case the current subframe of the data does not belong to the second beamforming time segment, perform the transmission of the subframe using the first beamforming configuration; in case the current subframe of the data belongs to the second beamforming time segment, perform the transmission of the subframe using the second beamforming configuration.

Clause 8. The apparatus of clause 1, wherein the instructions, when executed by the at least one processor, further cause the sender apparatus to: repeatedly receive a reference signal from the receiver apparatus; estimate the state of the channel using the reference signal, wherein the specific time period is a periodicity of the reception of the reference signal.

Clause 9. The apparatus of clause 8, the reference signal being a Sounding Reference Signal (SRS), a DeModulation Reference Signal (DMRS) or a reference signal that can be used for estimating the state of the channel.

Clause 10. The apparatus of clause 1, wherein the instructions, when executed by the at least one processor, further cause the sender apparatus to determine the first beamforming configuration that enables a maximization of a Signal-to-Interference-and-Noise-Ratio (SINR) of the receiver apparatus and one or more further receiver apparatuses; and determine the second beamforming configuration that enables a maximization of the sum of transmit power to the receiver apparatus and to the further receiver apparatuses.

Clause 11. The apparatus of clause 1, wherein the instructions, when executed by the at least one processor, further cause the sender apparatus to: transmit the data using the first beamforming configuration in accordance with a first modulation and coding scheme, and use the second beamforming configuration in accordance with a second modulation and coding scheme.

Clause 12. The apparatus of clause 1, the beamforming configuration comprising weights for weighting signals to be transmitted by the sender apparatus to the receiver apparatus in order to form beams toward the receiver apparatus.

Clause 13. The apparatus of clause 1, each beamforming configuration of the first beamforming configuration and the second beamforming configuration being an analog and/or digital beamforming configuration.

Clause 14. The apparatus of clause 1, wherein the instructions, when executed by the at least one processor, further cause the sender apparatus to: repeat the determining step and the transmitting step for one or more time periods subsequent to the specific time period.

Clause 15. The apparatus of clause 1, wherein the first beamforming configuration is determined for a first specific mobility of the sender apparatus and a second specific mobility of the receiver apparatus, wherein the time variation of the channel is determined by predicting a change of the first specific mobility and/or second specific mobility during a time segment of the specific time period, wherein the second beamforming configuration is used during the time segment.

Clause 16. The apparatus of clause 4, the sender apparatus being a user equipment that is served by the receiver apparatus, the receiver apparatus being a base station or being part of the base station.

Clause 17. The apparatus of clause 1, wherein the instructions, when executed by the at least one processor, further cause the sender apparatus to transmit the data by at least performing a multi-stream beamforming.

Clause 18: A non-transitory computer readable medium comprising program instructions that, when executed by a sender apparatus, cause the sender apparatus to perform at least the following: determining a first beamforming configuration for a specific time period in accordance with a state of a channel between the sender apparatus and a receiver apparatus for transmission of data to the receiver apparatus; during the specific time period: transmitting data to the receiver apparatus using the first beamforming configuration or using a second beamforming configuration in case of a time variation of the channel.

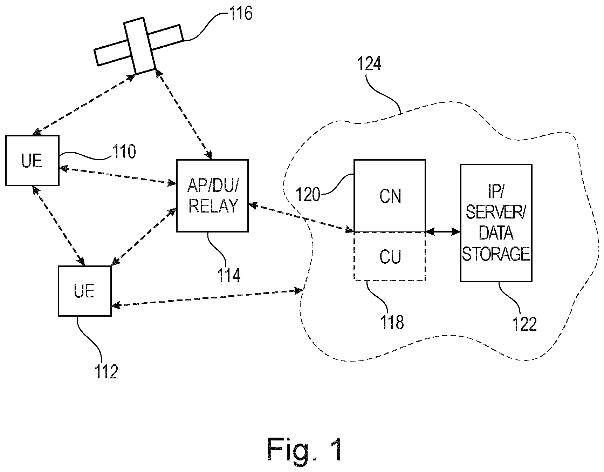

**FIG. 1** depicts examples of simplified system architectures only showing some elements and functional entities, all being logical units, whose implementation may differ from what is shown. The connections shown in FIG.1 are logical connections; the actual physical connections may be different. It is apparent to a person skilled in the art that the system typically comprises also other functions and structures than those shown in FIG.1.

The embodiments are not, however, restricted to the system given as an example but a person skilled in the art may apply the solution to other communication systems provided with necessary properties.

The example of FIG.1 shows a part of an exemplifying radio access network. FIG.1 shows devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g) NodeB) 114 providing or serving devices in a cell. In one example, the node 114 may be a non-3GPP access node. The physical link from a device to a (e/g)NodeB is called uplink or reverse link and the physical link from the (e/g) NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB may be/may comprise a computing device configured to control the radio resources of communication system it is coupled to. The NodeB may also be referred to as a base station, an access point or any other type of interfacing device including a relay station capable of operating in a wireless environment. The (e/g)NodeB may include or be coupled to transceivers or transmitters and receivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to a core network 20 (e.g. a CN or next generation core NGC). For example, the (e/g)NodeB may connect to an access and mobility management function (AMF) and user plane function (UPF) in the control plane and user plane, respectively. Depending on the system, the counterpart on the CN side may be a serving gateway (S-GW, routing and forwarding user data packets), packet data network gateway (P-GW), for providing connectivity of devices or user equipments (UEs) to external packet data networks, or mobile management entity (MME), etc.

The device (may also be called a user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in FIG. 1) may be implemented. 5G based systems enable using multiple input - multiple output (MIMO) antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G create needs to bring the content close to the radio which may lead to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is depicted in FIG.1 by "cloud" 124). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 114) and non-real time functions being carried out in a centralized manner (in a centralized unit, CU 118).

It should also be understood that the distribution of labour between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. One of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG.1 may provide any kind of these cells. A cellular radio system may be implemented as a multilayer network including several kinds of cells. Typically, in multilayer networks, one access node provides one kind of a cell or cells, and thus a plurality of (e/g) NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in FIG.1). A HNB Gateway (HNB-GW), which is typically installed within an operator's network may aggregate traffic from a large number of HNBs back to a core network.

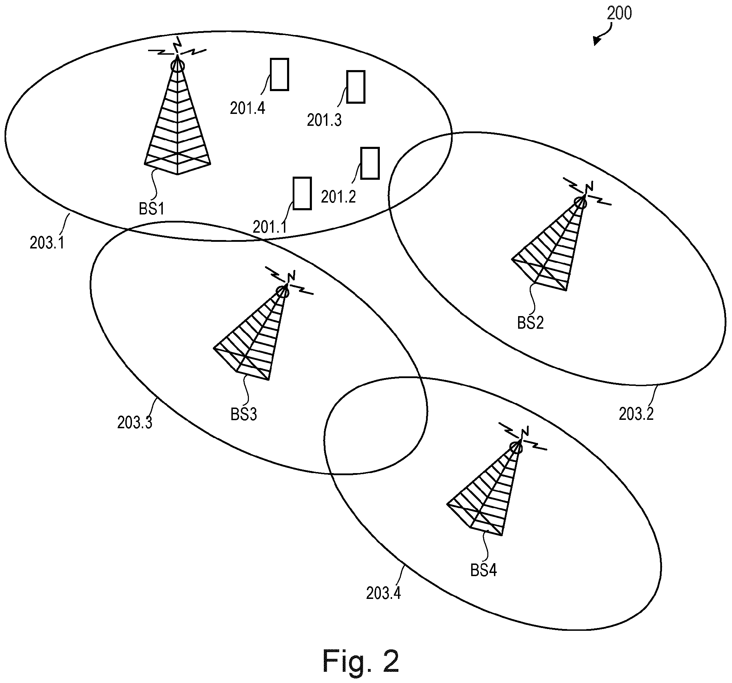

**FIG. 2** is a schematic illustration of a wireless communication system 200. The communication system 200 may be configured to use a time division duplex (TDD) technique for data transmission.

For simplicity, communication system 200 is shown to include four base stations BS1, BS2, BS3 and BS4 which may communicate with each other. Each base station of the base stations BS1, BS2, BS3 and BS4 may, for example, be eNodeB or gNB e.g., as described with reference to FIG. 1. That is, the communication system 200 may support a same RAT or different RATs.

Each base station of the base stations BS1 to BS4 may serve UEs within a respective geographical coverage area of service or cell 203.1-4. For simplicity, only user equipments 201.1 through 201.4 which are served by the base station BS1 are shown.

The UEs 201.1-4 may be served by the base station BS1. The UEs 201.1-4 may communicate with the base station BS1 over a wireless interface e.g., a radio interface. The UEs 201.1-4 may, for example, communicate with the other base stations BS2, BS3 and BS4 through the base station BS1.

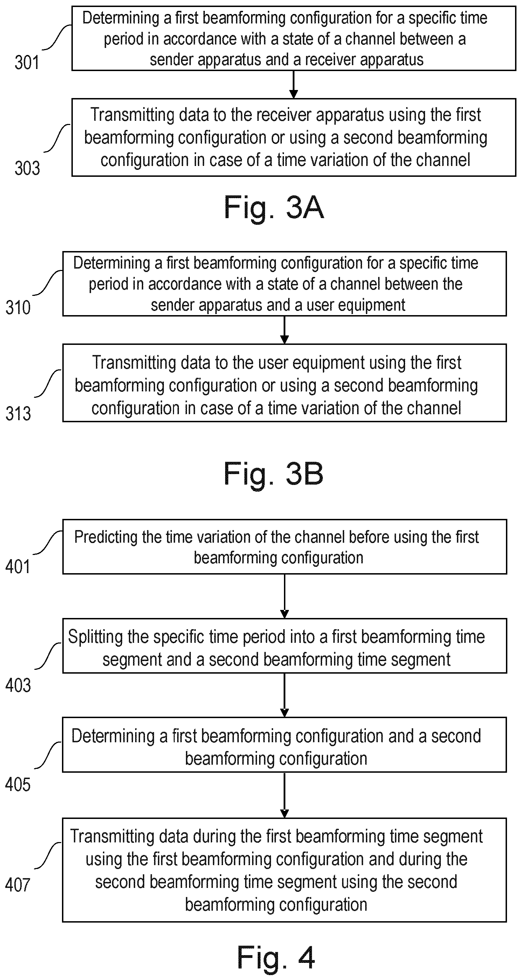

**FIG. 3A** is a flowchart of a method according to an example of the present subject matter. For the purpose of explanation, the method described in FIG 3A may be implemented in the system illustrated in FIG. 2, but is not limited to this implementation. The method may, for example, be implemented by a sender apparatus such as base station BS1 or UE 201.1.

A first beamforming configuration may be determined in step 301 for a specific time period $T_s$ for transmission of data by the sender apparatus to the receiver apparatus. The first beamforming configuration may be determined in accordance with a state of a channel between the sender apparatus and the receiver apparatus.

In step 303, during the specific time period $T_s$, data may be transmitted by the sender apparatus to the receiver apparatus using the first beamforming configuration or using a second beamforming configuration in case of a time variation of the channel.

In one example implementation of step 303, a first beamformer and second beamformer may be provided. The first beamformer may be a device of the sender apparatus that forms beams using the first beamforming configuration. The second beamformer may be a device of the sender apparatus that forms beams using the second beamforming configuration. In step 303, the first beamformer may be selected for the transmission of data using the first beamforming configuration and the second beamformer may be selected for the transmission of data using the second beamforming configuration.

**FIG. 3B** is a flowchart of a method according to an example of the present subject matter. For the purpose of explanation, the method described in FIG 3B may be implemented in the system illustrated in FIG. 2, but is not limited to this implementation. The method may, for example, be performed by a sender apparatus such as the base station BS1 for serving the user equipment 201.1.

A first beamforming configuration may be determined in step 310 for a specific time period $T_s$ for transmission of data to the user equipment. The first beamforming configuration may be determined in accordance with a state of a channel between the base station and the user equipment.

In step 313, during the specific time period $T_s$,

data may be transmitted to the user equipment using the first beamforming configuration or using a second beamforming configuration in case of a time variation of the channel.

**FIG. 4** is a flowchart of a method for transmitting data according to an example of the present subject matter. For the purpose of explanation, the method described in FIG. 4 may be implemented in the system illustrated in FIG. 2, but is not limited to this implementation. The method may, for example, be performed by the base station BS1 for serving the user equipment 201.1 during a specific time period.

A time variation of the channel between the base station BS1 and the user equipment 201.1 may be predicted in step 401. For example, the base station may identify the user equipment 201.1 as one of the potential users who are likely to change their mobility. These users may be the potential victims who could suffer from the loss of DL data rate due to such sporadic channel aging.

The specific time period may be split into a first beamforming time segment and a second beamforming time segment in step 403.

A first beamforming configuration and a second beamforming configuration may be determined in step 405 for the first beamforming time segment and second beamforming time segment respectively.

Data may be transmitted in step 407 by the base station BS1 to the user equipment during the first beamforming time segment using the first beamforming configuration and during the second beamforming time segment using the second beamforming configuration.

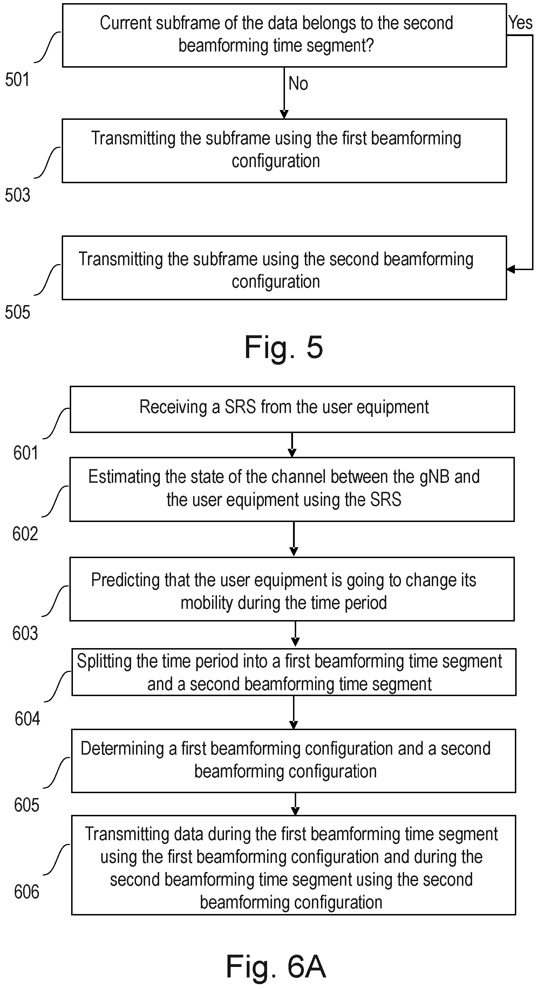

**FIG. 5** is a flowchart of a method for transmitting data in subframes according to an example of the present subject matter. For the purpose of explanation, the method described in FIG 5 may be implemented in the system illustrated in FIG. 2, but is not limited to this implementation. The method may, for example, be performed by the base station BS1 for serving the user equipment 201.1 during a specific time period. The method of FIG. 5 provides an example implementation of step 405 of FIG. 4.

It may be determined in step 501 whether a current subframe of the data belongs to the second beamforming time segment.

In case the current subframe of the data does not belong to the second beamforming time segment the transmission of the subframe may be performed in step 503 using the first beamforming configuration.

In case the current subframe of the data belongs to the second beamforming time segment the transmission of the subframe may be performed in step 505 using the second beamforming configuration.

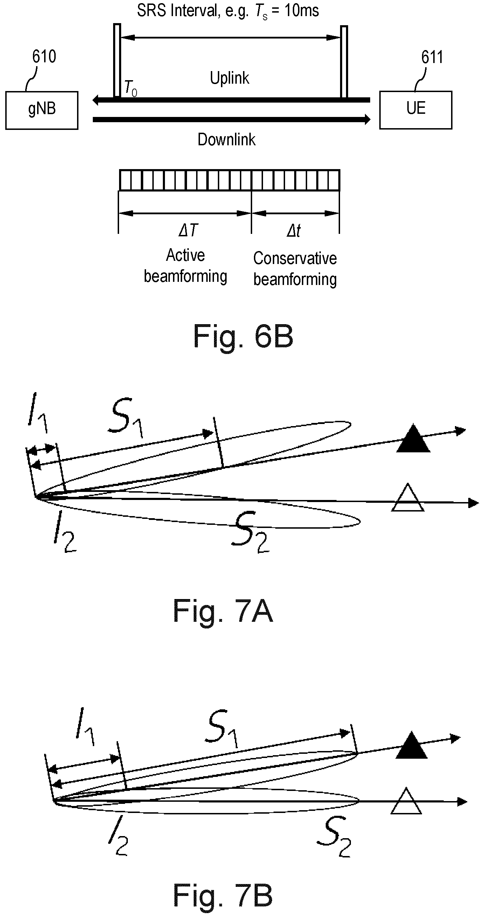

**FIG. 6A** is a flowchart of a method for transmitting data in subframes according to an example of the present subject matter. For the purpose of explanation, the method described in FIG 6A may be implemented in the system illustrated in FIG. 6B, but is not limited to this implementation. The method may, for example, be performed by the gNB 610 for serving the user equipment 611 as shown in FIG. 6B.

The gNB 610 may receive (e.g., at time $T_0$) in step 601 a SRS from the user equipment 611. The user equipment 611 is configured to send the SRS periodically with the period $T_s$.

The gNB 610 may use the SRS to estimate in step 602 the state of the channel between the gNB 610 and the user equipment 611. The estimated state may thus be valid for the time period from $T_0$ to $T_0+T_s$ e.g., until the next SRS is received. The estimated state may assume a specific mobility of the user equipment 611.

The gNB 610 may predict in step 603 that the user equipment 611 is going to change its mobility during the time period from $T_0$ to $T_0+T_s$.

The gNB 610 may split in step 604 the time period from $T_0$ to $T_0+T_s$ into a first beamforming time segment ($T_0$, $T_0+\Delta T$), and a second beamforming time segment ($T_0+\Delta T$, $T_0+\Delta T+\Delta t$).

A first beamforming configuration and a second beamforming configuration may be determined by the gNB 610 in step 605 for the first beamforming time segment and second beamforming time segment respectively. The first beamforming configuration may enable active beamforming and the second beamforming configuration may enable conservative beamforming as indicated in FIG. 6B.

Data may be transmitted in step 606 by the gNB 610 to the user equipment 611 during the first beamforming time segment using the first beamforming configuration and during the second beamforming time segment using the second beamforming configuration.

**FIGs.** 7A and 7B are diagrams illustrating a method for determining the beamforming configurations for the first beamforming time segment and second beamforming time segment in accordance with an example of the present subject matter.

First of all, the gNB may identify the potential users, who are likely to change their mobility. These users are the potential victims, who could suffer from the loss of DL data rate due to such sporadic channel aging. Rather let this user group suffer from loss of throughput, the present method may provide a beamforming solution for individual users from this group. The user group shown in FIGs. 7A-B may comprise two user equipments which are represented by filled and empty triangles respectively. For the DL subframes, when the channel is still predictable, active beamforming as illustrated in FIG. 7A may be exploited, in which accurate short-term channel estimation is required. For the DL subframes, when channel aging happens, conservative beamforming as illustrated in FIG. 7B may be activated, which depends on long-term $2^{nd}$ order channel statistics. The conservative beamformer is conservative, in sense of only considering the sum power, since the spatial Angle of Departure (AoD) can be a relative easier measure, which can be determined by long-term $2^{nd}$ order channel statistics, even without predicting the channel. On the other side, the conservativeness is with the cost of performance degradation, because the optimization of sum power cannot guarantee the optimization of the sum rate, if the status of interference and noise are totally omitted. Typcial active beamformers can be the eigenbeamformer or Direction of Arrival (DoA) estimation based beamformer.

As shown in FIG. 7A, the target for the first beamforming configuration is to maximize the Signal-to-Interference-and-Noise-Ratio (SINR) of both users, using the optimization problem

$$\max_{w_{BF}} \sum_{i=1}^{2} \log_2\left(1 + \frac{S_i}{I_i + N_i}\right)$$, where $S_i$ and $I_i$ denote the effective transmit power to user $i$ and the Inter-User Interference (IUI) from the other user pair, respectively. Notation $N_i$ stands for the Additive White Gaussian Noise (AWGN) of user $i$.

As shown in FIG. 7B, the target function of second beamforming configuration may be to equivalently maximize the sum power of both users as follows:

$$\max_{w_{BF}} \sum_{i=1}^{2} S_i$$. In return, the precise channel estimation and prediction may be required, since the beam steering may need to be done precisely and unexpected channel aging can change spatial sensitivity of the beam pattern and cause significant loss in DL data rate.

Typical active beamformers can be the Minimum Mean Square Error (MMSE) beamformer, and can be also an AI/ML-based channel estimator.

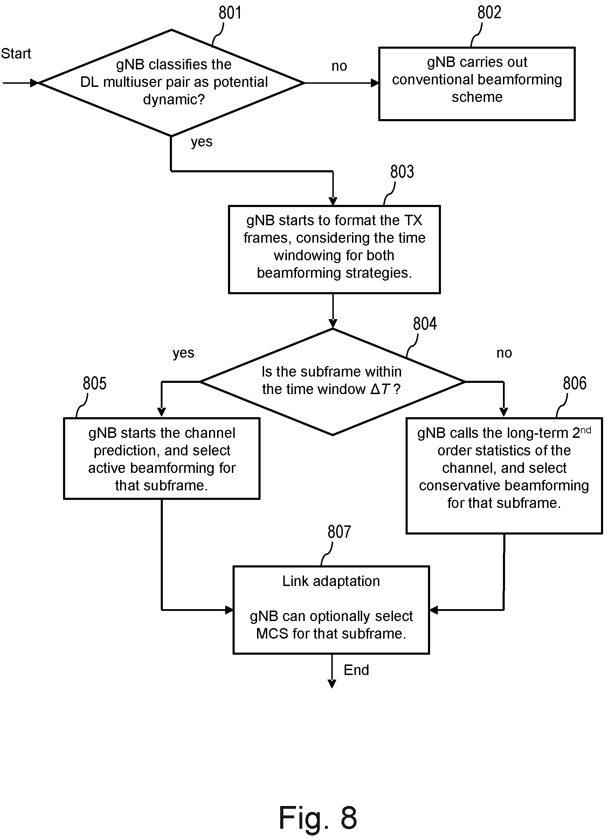

FIG. 8 is a flowchart of a method for transmitting data in consecutive subframes according to an example of the present subject matter. For the purpose of explanation, the method described in FIG 8 may be implemented in the system illustrated in FIG. 6B, but is not limited to this implementation. The method may, for example, be performed by the gNB 610 for serving the user equipment 611 as shown in FIG. 6B.

It may be determined in step 801 whether the gNB 610 classifies the DL multiuser pair as potential dynamic. If not, the gNB 610 carries in step 802 out conventional beamforming scheme. Otherwise, the gNB 610 starts in step 803 to format the TX frames, considering the time windowing for both beamforming strategies. It may be determined in step 804 if the subframe is within the time window ΔT. If so, the gNB 610 starts in step 805 the channel prediction, and selects active beamforming for that subframe. Otherwise, the gNB 610 calls in step 806 the long-term 2nd order statistics of the channel, and selects conservative beamforming for that subframe. In step 807, the gNB 610 may optionally select Modulation and Coding Scheme (MCS) for that subframe.

Thus, FIG. 8 summarizes how the gNB selects DL beamformers. Especially, it is indicated that the MCS as a part of link adaptation can be adjusted by gNB as well, after selecting the beamformer for a given DL subframe. For instance, once channel is still predictable and the channel is sufficient good, the active beamformer can nominate high order modulation scheme, e.g., 16QAM, 64QAM to further improve the DL sum rate. Similarly, for the subframes outside of the channel prediction window, the conservative beamformer can switch to low order modulation scheme, e.g., QPSK, in order to decrease the SINR threshold for successful detection and decoding.

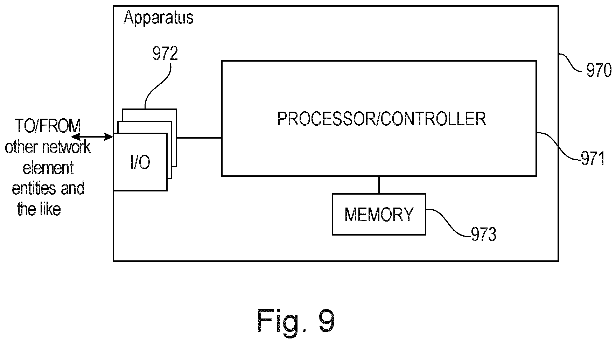

In **FIG. 9,** a block circuit diagram illustrating a configuration of an apparatus 970 is shown, which is configured to implement at least part of the present subject matter. FIG. 9 may provide an example implementation of the means of the sender apparatus according to the present subject matter. It is to be noted that the apparatus 970 shown in FIG. 9 may comprise several further elements or functions besides those described herein below, which are omitted herein for the sake of simplicity as they are not essential for the understanding. Furthermore, the apparatus may be also another device having a similar function, such as a chipset, a chip, a module etc., which can also be part of an apparatus or attached as a separate element to the apparatus 970, or the like. The apparatus 970 may comprise a processing function or processor 971, such as a central processing unit (CPU) or the like, which executes instructions given by programs or the like related to a flow control mechanism. The processor 971 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example. Reference sign 972 denotes transceiver or input/output (I/O) units (interfaces) connected to the processor 971. The I/O units 972 may be used for communicating with one or more other network elements, entities, terminals or the like. The I/O units 972 may be a combined unit comprising communication equipment towards several network elements or may comprise a distributed structure with a plurality of different interfaces for different network elements. Reference sign 973 denotes a memory usable, for example, for storing data and programs to be executed by the processor 971 and/or as a working storage of the processor 971.

The processor 971 is configured to execute processing related to the above described subject matter. In particular, the apparatus 970 may be configured to perform the method as described in connection with FIG 3A, 3B, 4, 5, 6A or 8.

For example, the processor 971 is configured for: determining a first beamforming configuration for a specific time period in accordance with a state of a channel between a sender apparatus and a receiver apparatus for transmission of data to the receiver apparatus; during the specific time period: transmitting data to the receiver apparatus using the first beamforming configuration or using a second beamforming configuration in case of a time variation of the channel.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code.

References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a precompiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. An apparatus, sender apparatus, for a wireless communication system, the sender apparatus comprising means, the means being configured to:

   determining a first beamforming configuration for a specific time period in accordance with a state of a channel between the sender apparatus and
   a receiver apparatus for transmission of data to the receiver apparatus;
   determining whether there is a time variation of the channel during the specific time period;
   during the specific time period: transmitting data to the receiver apparatus using at least one of the following:

   the first beamforming configuration or
   a second beamforming configuration based on determining that there is a time variation of the channel.

2. The apparatus of claim 1, the receiver apparatus being a user equipment that is served by the sender apparatus, the sender apparatus being a base station or being part of the base station.

3. The apparatus of any of the preceding claims, the receiver apparatus being a user equipment, the means being configured to predicting the time variation of the channel by predicting that a mobility of a group of receiver apparatuses which are being served by the sender apparatus and/or a mobility of the sender apparatus will change, the group of receiver apparatuses including the receiver apparatus, wherein the first beamforming configuration and second beamforming configuration are determined for transmission of data to the group of receiver apparatuses.

4. The apparatus of any of the preceding claims, wherein the first beamforming configuration is determined for a specific mobility of the receiver apparatus, the means being configured to predicting the time variation of the channel by predicting a change of the specific mobility during a second beamforming time segment of the specific time period, wherein the second beamforming configuration is used during the second beamforming time segment.

5. The apparatus of any of the preceding claims, the means being configured to:

   predicting the time variation of the channel before using the first beamforming configuration;
   splitting the specific time period into a first beamforming time segment and a second beamforming time segment;
   predefining the first beamforming configuration and the second beamforming configuration such that the first beamforming configuration is used during the first beamforming time segment and the second beamforming configuration is used during the second beamforming time segment.

6. The apparatus of any of the preceding claims 1 to 3, the means being configured to detecting the time variation of the channel during the specific time period.

7. The apparatus of any of the preceding claims, the means being configured to transmitting data in subframes by at least:

   determining whether a current subframe of the data belongs to the second beamforming time segment;
   in case the current subframe of the data does not belong to the second beamforming time segment, performing the transmission of the subframe using the first beamforming configuration;
   in case the current subframe of the data belongs to the second beamforming time segment, performing the transmission of the subframe using the second beamforming configuration.

8. The apparatus of any of the preceding claims, the means being configured to:

repeatedly receiving a reference signal from the receiver apparatus;
estimating the state of the channel using the reference signal, wherein
the specific time period is a periodicity of the reception of the reference signal.

9. The apparatus of claim 8, the reference signal being a Sounding Reference Signal (SRS), a DeModulation Reference Signal (DMRS) or a reference signal that can be used for estimating the state of the channel.

10. The apparatus of any of the preceding claims, wherein the means are configured to

   determining the first beamforming configuration that enables a maximization of a Signal-to-Interference-and-Noise-Ratio (SINR) of the receiver apparatus and one or more further receiver apparatuses;
   determining the second beamforming configuration that enables a maximization of the sum of transmit power to the receiver apparatus and to the further receiver apparatuses.

11. The apparatus of any of the preceding claims, wherein the means are configured to: transmitting the data using the first beamforming configuration in accordance with a first modulation and coding scheme, and using the second beamforming configuration in accordance with a second modulation and coding scheme.

12. The apparatus of any of the preceding claims, wherein the means are configured to: repeating the determining step and the transmitting step for one or more time periods subsequent to the specific time period.

13. The apparatus of any of the preceding claims, wherein the first beamforming configuration is determined for a first specific mobility of the sender apparatus and a second specific mobility of the receiver apparatus, wherein the time variation of the channel is determined by predicting a change of the first specific mobility and/or second specific mobility during a time segment of the specific time period, wherein the second beamforming configuration is used during the time segment.

14. The apparatus of any of the preceding claims 4 to 13, the sender apparatus being a user equipment that is served by the receiver apparatus, the receiver apparatus being a base station or being part of the base station.

15. A method comprising:

determining a first beamforming configuration for a specific time period in accordance with a state of a channel between a sender apparatus and a receiver apparatus for transmission of data to the receiver apparatus;

determining whether a time variation of the channel during the specific time period;

during the specific time period: transmitting data to the receiver apparatus using at least one of the following:

the first beamforming configuration or a second beamforming configuration based on determining that there is a time variation of the channel.

Fig. 1

Fig. 2

Determining a first beamforming configuration for a specific time period in accordance with a state of a channel between a sender apparatus and a receiver apparatus

301

Transmitting data to the receiver apparatus using the first beamforming configuration or using a second beamforming configuration in case of a time variation of the channel

303

## Fig. 3A

Determining a first beamforming configuration for a specific time period in accordance with a state of a channel between the sender apparatus and a user equipment

310

Transmitting data to the user equipment using the first beamforming configuration or using a second beamforming configuration in case of a time variation of the channel

313

## Fig. 3B

Predicting the time variation of the channel before using the first beamforming configuration

401

Splitting the specific time period into a first beamforming time segment and a second beamforming time segment

403

Determining a first beamforming configuration and a second beamforming configuration

405

Transmitting data during the first beamforming time segment using the first beamforming configuration and during the second beamforming time segment using the second beamforming configuration

407

## Fig. 4

Current subframe of the data belongs to the second beamforming time segment? ─── Yes

501

No

Transmitting the subframe using the first beamforming configuration

503

Transmitting the subframe using the second beamforming configuration

505

# Fig. 5

Receiving a SRS from the user equipment

601

Estimating the state of the channel between the gNB and the user equipment using the SRS

602

Predicting that the user equipment is going to change its mobility during the time period

603

Splitting the time period into a first beamforming time segment and a second beamforming time segment

604

Determining a first beamforming configuration and a second beamforming configuration

605

Transmitting data during the first beamforming time segment using the first beamforming configuration and during the second beamforming time segment using the second beamforming configuration

606

# Fig. 6A

Fig. 6B

Fig. 7A

Fig. 7B

801

Start → gNB classifies the DL multiuser pair as potential dynamic?

no → 802 gNB carries out conventional beamforming scheme

yes

803

gNB starts to format the TX frames, considering the time windowing for both beamforming strategies.

804

yes ← Is the subframe within the time window $\Delta T$? → no

805

gNB starts the channel prediction, and select active beamforming for that subframe.

806

gNB calls the long-term 2nd order statistics of the channel, and select conservative beamforming for that subframe.

807

Link adaptation

gNB can optionally select MCS for that subframe.

End

Fig. 8

Fig. 9

| | Europäisches Patentamt |
|---|---|
| | European Patent Office |
| | Office européen des brevets |

# EUROPEAN SEARCH REPORT

**Application Number**

EP 24 21 4712

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/070723 A1 (YIE CHUNG KU [KR] ET AL) 21 March 2013 (2013-03-21)<br>* paragraph [0070] - paragraph [0071] *<br>* paragraph [0084] - paragraph [0089] *<br>- - - - - | 1-15 | INV.<br>H04L5/00<br>H04B7/06 |
| X | EP 4 262 105 A1 (SAMSUNG ELECTRONICS CO LTD [KR]) 18 October 2023 (2023-10-18)<br>* paragraph [0002] - paragraph [0007] *<br>* paragraph [0015] - paragraph [0022] *<br>- - - - - | 1-15 | |
| X | US 2013/336280 A1 (NORDSTROEM FREDRIK [SE] ET AL) 19 December 2013 (2013-12-19)<br>* paragraph [0051] - paragraph [0058] *<br>* figure 3 *<br>- - - - - | 1-15 | |

**TECHNICAL FIELDS SEARCHED (IPC)**

H04L
H04B

The present search report has been drawn up for all claims

| Place of search | Date of completion of the search | Examiner |
|---|---|---|
| The Hague | 14 April 2025 | Colzi, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4712

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | | | Publication date | Patent family member(s) | | | Publication date |
|---|---|---|---|---|---|---|---|
| US 2013070723 | A1 | | 21-03-2013 | CN | 103004104 | A | 27-03-2013 |
| | | | | EP | 2579472 | A2 | 10-04-2013 |
| | | | | KR | 20110132979 | A | 09-12-2011 |
| | | | | US | 2013070723 | A1 | 21-03-2013 |
| | | | | WO | 2011152638 | A2 | 08-12-2011 |
| EP 4262105 | A1 | | 18-10-2023 | EP | 4262105 | A1 | 18-10-2023 |
| | | | | KR | 20230148095 | A | 24-10-2023 |
| | | | | TW | 202343994 | A | 01-11-2023 |
| | | | | US | 2023336225 | A1 | 19-10-2023 |
| US 2013336280 | A1 | | 19-12-2013 | CN | 104380648 | A | 25-02-2015 |
| | | | | EP | 2862308 | A1 | 22-04-2015 |
| | | | | US | 2013336280 | A1 | 19-12-2013 |
| | | | | WO | 2013189834 | A1 | 27-12-2013 |

EPO FORM P0459

For more details about this annex : see Official Journal of the European Patent Office, No. 12/82